# FASCICULE DE BREVET EUROPEEN

(11) **EP 0 421 874 B1**
(45) Date de publication et mention de la délivrance du brevet: **13.05.1998**
(21) Numéro de dépôt: 90402734.9
(22) Date de dépôt: 03.10.1990
(51) Int. Cl.: G11B 11/10

(54) **Tête de lecture magnétooptique à haute résolution**
Magneto-optischer Wiedergabekopf mit hoher Auflösung
High-resolution magneto-optical playback head

(30) Priorité: 03.10.1989 FR 8912895
(43) Date de publication de la demande: 10.04.1991
(73) Titulaire: THOMSON-CSF, 75008 Paris (FR)
(72) Inventeur: Colineau, Joseph, F-92045 Paris la Defense (FR); Neubert, Sophie, F-92045 Paris la Defense (FR)
(74) Mandataire: Chaverneff, Vladimir

(56) Documents cités:
- EP-A- 0 233 086
- FR-A- 2 605 783
- GB-A- 2 120 001
- US-A- 4 618 901
- US-A- 4 677 513
- PATENT ABSTRACTS OF JAPAN vol. 12, no. 34 (P-662)(2881) 02 février 1988, & JP- A-62 185267 (HITACHI) 13 août 1987,

## Description

La présente invention se rapporte à une tête de lecture magnétooptique à haute résolution.

La lecture magnétooptique de bandes ou disques magnétiques utilisant l'effet Faraday dans un grenat ferrimagnétique disposé au contact ou à proximité du support magnétique est connue par exemple d'après des publications de T. NOMURA (Société NHK). Un tel mode de lecture offre de bonnes performances pour ce qui est du niveau minimal de signal détectable (lorsque son amplitude est proche de l'amplitude moyenne du bruit), en particulier pour l'enregistrement sur pistes étroites. Par contre, ce mode de lecture présente une résolution assez faible, limitée à la fois par la résolution du système optique et par la bande spatiale (dimensions naturelles des domaines) du grenat. Il est ainsi difficile de lire des signaux de longueur d'onde inférieure à un micromètre, alors que les bandes magnétiques actuelles permettent d'enregistrer des signaux de longueur d'onde 0,5 micromètre ou moins.

T. NOMURA a décrit une solution associant au grenat utilisé en transducteur magnétooptique une structure magnétique de couplage avec la bande magnétique. Cette structure est une pièce polaire de dimensions microscopiques (épaisseur 0,6 µm, largeur de piste 15 µm, hauteur 25 µm) rapportée et collée sur le grenat.

On pourrait envisager l'utilisation de transducteurs magnétooptiques pour la lecture d'enregistrements magnétiques muitiplstes à haute densité, mais le problème majeur qui se pose alors est la diaphonie entre pistes. Le dispositif actuel de T. NOMURA ne permettrait pas de réaliser un dispositif multipiste par suite de la forte perméance de piste à piste présentée par la pièce polaire. Il faudrait fractionner cette pièce polaire, ce qui poserait de très grands problèmes de réalisation.

Le document JP 62-185267 décrit une tête de lecture comportant une couche magnéto-optique perpendiculaire à la bande à lire. Des pièces polaires sont situées de part et d'autre de la couche magnéto-optique et d'une couche d'entrefer. Cependant, cette configuration ne permet pas de fixer les parois des domaines magnétiques ce qui ne permet pas de réaliser sur la couche magnéto-optique un réseau dense de micro-têtes.

La présente invention a pour objet une tête de lecture magnéto-optique qui peut avantageusement être multipiste, qui soit facile à réaliser, de prix de revient le plus faible possible, et qui présente à la fois une haute résolution et la plus faible diaphonie possible si elle est multipiste.

La tête de lecture magnéto-optique conforme à l'invention est définie à la revendication 1.

Egalement de façon avantageuse, on peut appliquer au transducteur magnéto-optique un champ variable magnétique ou électromagnétique.

Selon une variante avantageuse de l'invention, le matériau du transducteur magnéto-optique présente une anisotropie oblique et est monodomaine sur au moins l'une des pièces polaires.

La présente invention sera mieux comprise à la lecture de la description détaillée de plusieurs modes de réalisation, pris à titre d'exemples non limitatifs et illustrés par les dessins annexés, sur lesquels :
- la figure 1 est une vue simplifiée en perspective d'une tête de lecture magnéto-optique de l'art antérieur,
- les figures 2 et 2A sont respectivement une vue simplifie en perspective d'une tête de lecture magnéto-optique conforme à l'invention, et une vue simplifiée en coupe d'une variante ne faisant pas partie de l'invention.
- la figure 3 est une vue partielle simplifiée d'un exemple de réalisation de tête magnéto-optique conforme à l'invention,
- la figure 4 est une vue schématique en coupe d'une tête de lecture conforme à l'invention, montrant des lignes de champ qu'elle génère,
- la figure 5 est un ensemble de vues schématiques en coupe d'une tête de lecture conforme à l'invention, montrant le déplacement des parois des domaines du transducteur magnétooptique sous l'effet du champ généré par un dipôle magnétique,
- la figure 6 est un schéma simplifié d'un exemple de réalisation de système de lecture magnétooptique comprenant une tête de lecture conforme à l'invention,
- la figure 7 est un ensemble de vues schématiques en coupe illustrant divers modes de lecture pouvant être mis en oeuvre avec une tête de lecture conforme à l'invention,
- la figure 8 est un ensemble de vues schématiques illustrant diverses configurations possibles des domaines du transducteur d'une tête de lecture conforme à l'invention,
- la figure 9 est une vue schématique en coupe d'un mode de réalisation pratique en couches minces d'une tête de lecture conforme à l'invention, et
- la figure 10 est un ensemble de vues simplifiées en plan de pôles d'une tête de lecture multipiste conforme à l'invention.

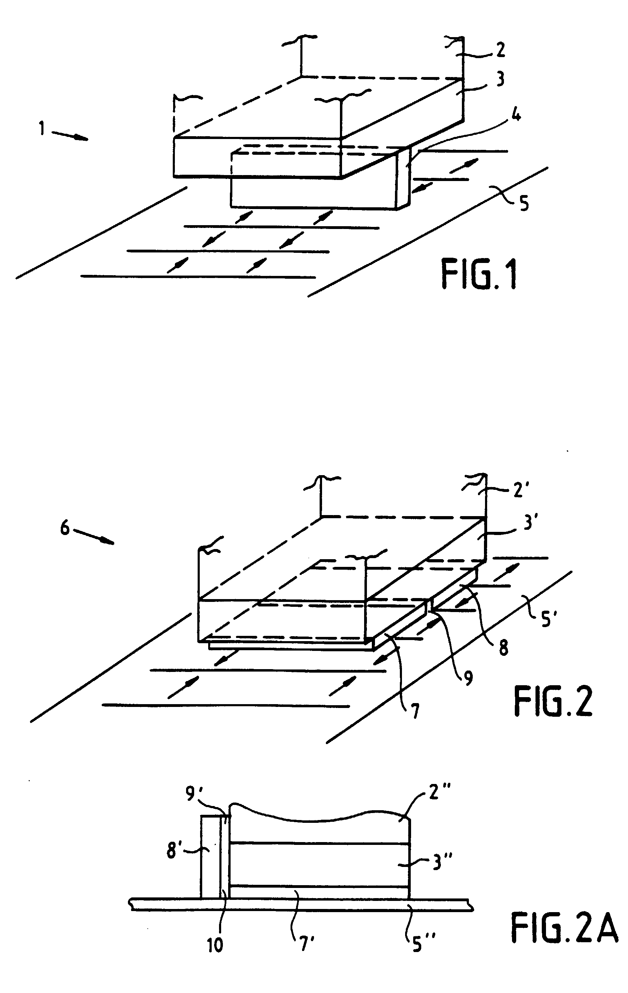

La tête de lecture magnétooptique 1 représentée en figure 1 a été décrite dans des articles de T. NOMURA comme précisé ci-dessus. Cette tête connue comporte, sur un substrat 2, une couche 3 de grenat ferromagnétique. Une pièce polaire 4 en forme de parallélépipède rectangle en matériau magnétique est rapportée ou collée sur le grenat 3. La pièce polaire 4 est disposée au milieu de la longueur de la couche de grenat 3, parallèlement à ses petits côtés. Les grands côtés de la pièce polaire 4 sont perpendiculaires à la direction de défilement du support magnétique 5, qui est par exemple une bande magnétique. La bande 5 est en contact avec la face de la pièce 4 opposée à sa face fixée sur le grenat 3.

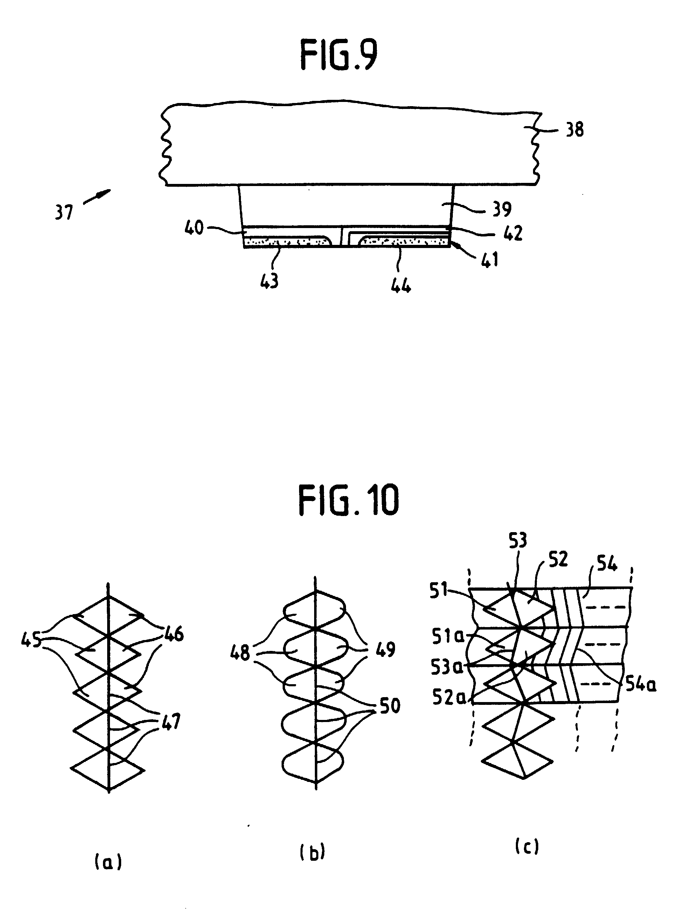

La tête magnétique 6 conforme à l'invention (figure 2) comporte, comme la tête 1, un substrat 2' et une couche de grenat 3'. Par contre, l'interface de la tête 6, entre le support magnétique 5' et le grenat 3', est tout à fait différente de celle de la tête 1. Cette interface comporte deux pièces polaires 7,8 qui sont séparées par un entrefer étroit 9. Pour le mode de réalisation représenté sur la figure 2, les pièces polaires 7,8 sont en forme de parallélépipèdes rectangles très minces (épaisseur de quelques micromètres par exemple) formés tous deux sur la même face (celle en vis-à-vis de la bande 5') de la couche 3'. Comme décrit ci-dessous, en référence à la figure 10, ces pièces polaires peuvent avoir d'autres formes. En outre, le nombre de ces pièces polaires peut être supérieur à deux. Selon le mode de réalisation, représenté en figure 2A et ne faisant pas partie de l'invention, l'une des pièces polaires 7' est formée sur la grande face libre de la couche de grenat 3" (elle-même formée sur un substrat 2") dont elle occupe la quasi-totalité de la surface, alors que l'autre pièce polaire, référencée 8', est formée sur une couche non magnétique 9' très fine elle-même formée sur une face latérale commune des couches 2",3" et 7' (face qui sera orientée perpendiculairement à la direction de défilement de la bande 5"). Les couches 8' et 9' sont disposées de façon à recouvrir pratiquement entièrement la face latérale de la couche 7', ce qui fait que l'on obtient entre les pièces polaires 7' et 8' un entrefer 10 rempli par le matériau de la couche 9'.

Selon une variante, non représentée, on peut former, pour la même tête, plus de deux pièces polaires, par exemple quatre, dont les entrefers sont par exemple perpendiculaires entre eux.

La résolution de la tête magnétique conforme à l'invention est liée, comme dans une tête magnétique conventionnelle, à la largeur de l'entrefer, et sa sensibilité dépend en particulier de la part du flux généré par la bande magnétique venant interagir avec la couche magnétooptique (3' ou 3").

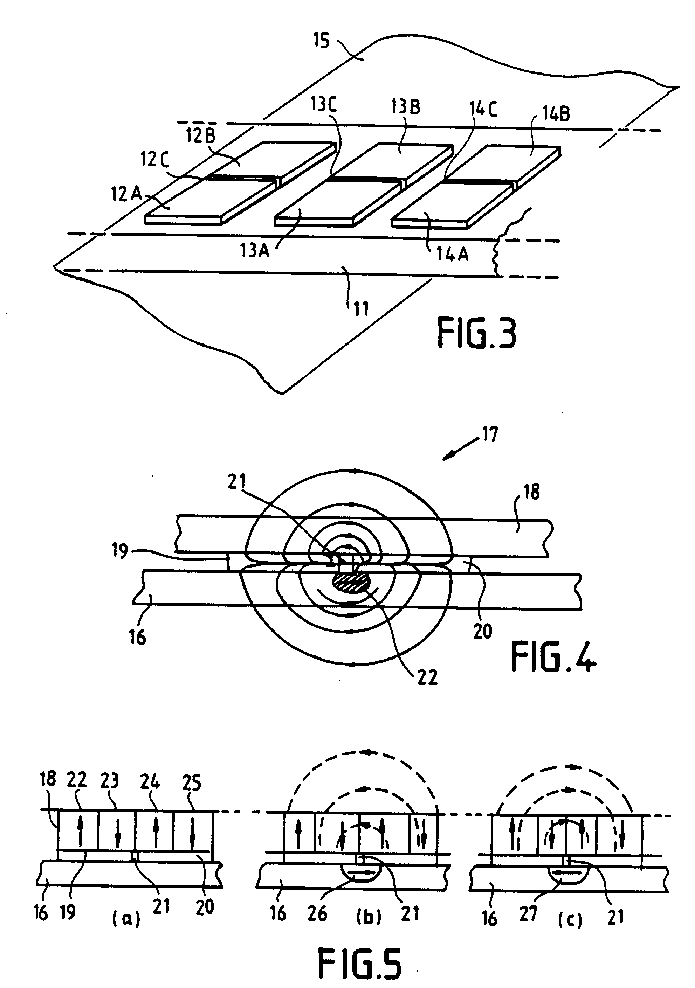

On a représenté en figure 3 un mode de réalisation multipiste de la tête magnétique conforme à l'invention. Dans ce mode de réalisation, les pièces polaires sont reproduites périodiquement à la surface du grenat, par exemple en ligne.

Sur la figure 3, on n'a représenté que la couche de grenat 11 et les paires de pièces polaires 12A et 12B, 13A et 13B, 14A et 14B..., dont les entrefers respectifs 12C,13C,14C sont alignés selon une direction perpendiculaire au sens de défilement de la bande magnétique 15.

On va maintenant expliquer le fonctionnement de la tête conforme à l'invention en référence aux figures 4 à 8.

Sur la figure 4, on a représenté la distribution du flux magnétique créé par la bande magnétique 16 dans une tête de lecture magnétooptique 17. Pour cette tête 17, on n'a représenté que la couche de grenat 18 et les pièces polaires 19,20 avec leur entrefer 21.

Lors de son passage sous l'entrefer 21, un dipôle magnétique 22 de la bande 16 impose une différence de potentiel magnétique entre ses deux pôles, ce qui crée une distribution de champ approximativement cylindrique dans le voisinage de l'entrefer 21. La composante perpendiculaire du champ traversant la couche mince de grenat magnétooptique 18 interagit avec les domaines magnétiques du grenat et modifie leur disposition et/ou leurs surfaces respectives.

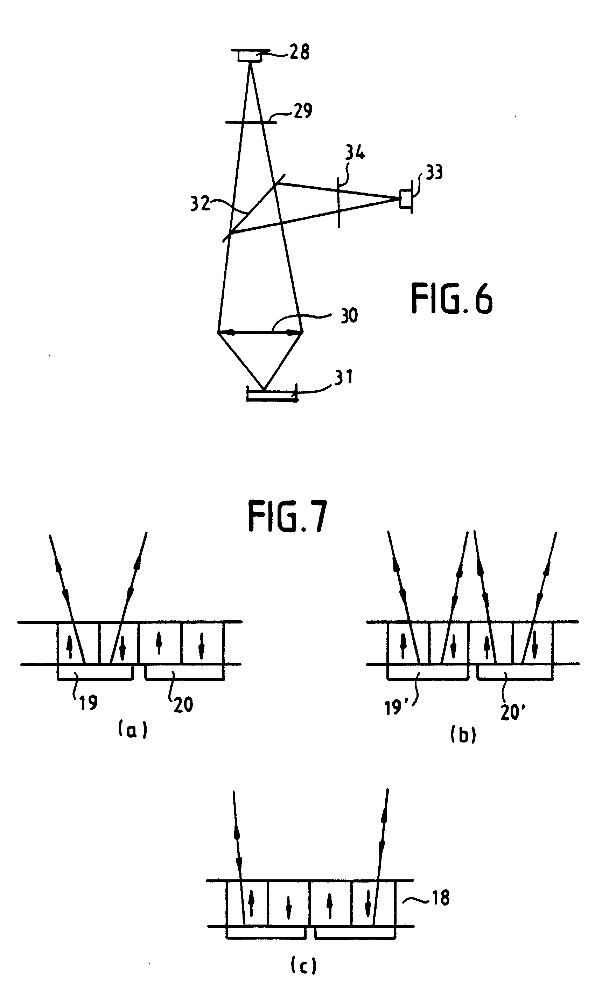

La figure 5 illustre cette interaction dans le cas particulier où quatre domaines magnétiques 22 à 25 du grenat 18 sont alignés selon la direction de déplacement de la bande magnétique 16. Les domaines 22 et 23 sont recouverts par la pièce polaire 19, et les domaines 24 et 25 sont recouverts par la pièce polaire 20. Dans cette structure, les bords des pièces polaires 19,20 et l'entrefer 21 fixent la position des parois correspondantes des domaines, et seules les parois médianes situées au niveau des milieux des pièces polaires (parois entre domaines 22 et 23 et entre domaines 24,25) se déplacent sous l'effet du champ généré par la bande magnétique 16. Le passage sous l'entrefer 21 d'un dipôle magnétique se traduit par un mouvement de parois médianes, déplacement dont le sens est fonction de la polarité dudit dipôle. La vue a de la figure 5 représente les domaines au repos. La vue b de la figure 5b se rapporte au cas où un dipôle 26 passant sous l'entrefer 21 a son pôle nord du côté de la pièce polaire 19 et son pôle sud du côté de la pièce polaire 20. Les domaines 23 et 24 ont alors tendance à s'élargir aux dépens des domaines 22 et 25 respectivement.

La vue c de la figure 5 se rapporte au cas inverse, c'est-à-dire au cas où un dipôle 27, passant sous l'entrefer 21, a une polarité inverse de celle du dipôle 26 de la vue b. Dans ce cas, les domaines 22 et 25 ont tendance à s'élargir aux dépens des domaines 23,24.

Le mouvement des parois séparant les domaines 22,23 et 24,25 peut être mesuré à l'aide d'un système optique analogue à celui d'une tête de lecture de disque magnétooptique et illustré schématiquement en figure 6. Ce système étant bien connu en soi, ne sera décrit ici que brièvement. Ce système comporte essentiellement une source lumineuse 28 à diode laser, dont le faisceau lumineux passe par un polariseur 29 et un objectif 30 qui le concentre sur l'une des parois mobiles du grenat 31 d'une tête de lecture conforme à l'invention (non représentée). Le faisceau réfléchi par le grenat passe par l'objectif 30 et est dévié par un séparateur de faisceau 32, disposé entre l'objectif 30 et le polariseur 29, vers un dispositif analyseur à photo-diode 33 via un filtre 34.

Selon un premier mode de réalisation (figure 7, vue a), le faisceau focalisé par l'objectif 30 sur le grenat 31 est projeté en direction de l'une des deux pièces polaires, par exemple la pièce polaire 19. Selon un second mode de réalisation (vue b de la figure 7), on projette un faisceau en direction de chacune des deux pièces polaires 19',20' et on réalise un système de mesure différentiel, dont les détails de réalisation sont évidents pour l'homme de l'art. Selon un troisième mode de réalisation (vue c de la figure 7), on projette un seul faisceau sur l'ensemble du grenat 18, et on utilise la figure de diffraction produite par l'ensemble des domaines de ce grenat. Les détails de réalisation d'un tel système sont également évidents pour l'homme de l'art.

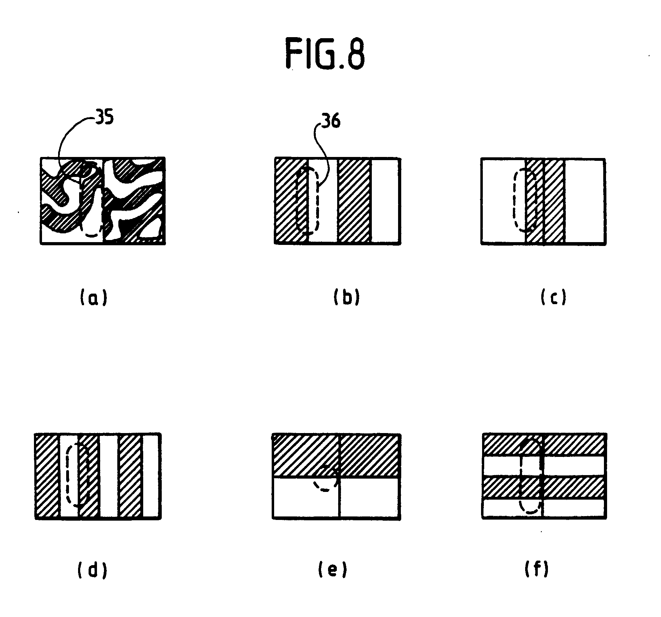

Le fonctionnement de la tête de lecture conforme à l'invention a été décrit ci-dessus dans le cas d'une structure de grenat à quatre domaines, ce qui ne se produit pas toujours dans la réalité. En pratique, l'organisation des domaines magnétiques d'un grenat peut prendre diverses formes qui peuvent également être utilisées pour la tête de lecture de l'invention. On rencontre souvent une disposition en labyrinthes, comme représenté sur la vue a de la figure 8. C'est la configuration prise naturellement par les domaines magnétiques du grenat en l'absence de contrainte extérieure. Dans ce cas, le spot du faisceau de la tête de lecture mesure la variation relative de surface des domaines magnétiques orientés dans deux directions généralement perpendiculaires entre elles. La densité de flux généré par la bande magnétique dans le grenat étant la plus élevée à proximité de l'entrefer, le spot 35 est, de préférence, de forme sensiblement rectangulaire et parallèle à l'entrefer (vue a, figure 8).

Si les domaines du grenat sont, comme représenté sur les vues b à d de la figure 8, en forme de bandes parallèles à l'entrefer (3 bandes ou plus), le spot de lecture 36 est, de préférence, de forme sensiblement rectangulaire et allongée, parallèle à l'entrefer, ce qui minimise le bruit lié aux mouvements parasites de la paroi.

Si, comme représenté sur les vues e et f de la figure 8, les domaines du grenat sont perpendiculaires à l'entrefer, leur structure comportant au moins deux bandes, on focalise le spot le plus près possible de l'entrefer, puisque c'est là que le déplacement des parois a la plus grande amplitude.

On a représenté en figure 9, un mode de réalisation pratique de tête de lecture conforme à l'invention. La tête 37 comporte un substrat 38, par exemple en GGG (Gadolinium, Gallium, Grenat). On forme sur le substrat 38, par croissance épitaxiale en phase liquide, une couche mince magnétooptique 39, par exemple un grenat de terres rares et de fer dopé au Bismuth ou au Cerium. On forme ensuite sur la couche 39 les pièces polaires 40,41 et l'entrefer 42 selon la technique planaire de réalisation de têtes magnétiques en couches minces telle que décrite dans la Demande de Brevet français FR-A-2 605 783. Les pièces polaires 40,41 sont avantageusement réalisées en Sendust et l'entrefer 42 en alumine. Un tel procédé est particulièrement adapté à la réalisation de têtes multipistes puisqu'il permet de fabriquer de manière collective un grand nombre de micro-têtes parfaitement positionnées les unes par rapport aux autres, la précision géométrique étant celle du masque de gravure des pièces polaires.

De manière à éliminer toute possibilité de couplage direct du grenat et de la bande magnétique en-dehors des pôles, ce qui entraînerait la lecture de signaux parasites, il est préférable de graver la couche mince de grenat 39 au cours du même processus que celui permettant de graver les pièces polaires. De façon avantageuse, les pièces polaires 40,41 peuvent être amincies dans leurs parties éloignées de l'entrefer 42, le matériau magnétique manquant étant remplacé par du matériau non-magnétique 43,44, afin de garder planes les faces de ces pièces polaires destinées à être en contact avec la bande magnétique à lire.

Selon un exemple de réalisation de la tête de la figure 9, ses dimensions typiques sont, approximativement les suivantes :
- épaisseur de la couche de grenat 39 : 2µm
- épaisseur des pièces polaires 40,41 (en Sendust par exemple) : 1µm
- largeur de l'entrefer : 0,25µm
- dimensions de la micro-tête (au niveau du grenat 39) : 20µm x 20µm.

La forme des pièces polaires 40,41 dépend d'un certain nombre de facteurs :
- efficacité du transfert de flux de la bande vers le grenat 39 (environ 20% du flux magnétique créé par la bande sert à déplacer les parois des domaines du grenat)
- géométrie désirée des domaines
- présence ou non d'un azimut
- minimisation de l'effet de "pseudo-gap" (entrefer fantôme) aux bords des pièces polaires opposés à l'entrefer 42
- minimisation de la diaphonie dans les structures multipistes.

Pour tenir compte de ces facteurs, on peut avantageusement modifier localement les propriétés magnétiques des pièces polaires par exemple en modifiant leurs formes (formes différentes de la forme rectangulaire), comme décrit ci-dessous en référence à la figure 10.

En outre, on peut avantageusement appliquer un champ magnétique ou électro-magnétique variable au grenat pour faire subir aux parois non fixées des déplacements de grande amplitude qui sont modulés par la grandeur à lire.

On a représenté en figure 10 trois exemples de formes de pièces polaires appropriées pour des têtes multipistes. En (a), les pièces polaires 45,46 sont en forme de triangles isocèles. Pour chaque micro-tête, ces triangles ont leurs bases en vis-à-vis, l'entrefer 47 étant formé entre ces bases. Les entrefers des différentes micro-têtes sont alignés.

En (b), on a représenté des pièces polaires 48,49 ayant une forme voisine de celle des pièces 45,46, mais dont les côtés autres que la base sont arrondis et peuvent présenter un contour sensiblement en forme de demi-sinusoïde. L'entrefer 50 est formé entre les bases en vis-à-vis des pièces polaires 48,49. Les entrefers des différentes micro-têtes sont alignés.

En (c), les pièces polaires 51,52,51a,52a,... sont de forme triangulaire, mais non isocèle. Leurs entrefers respectifs 53,53a,... ne sont pas alignés, et forment une ligne brisée permettant l'azimutage (pistes 54,54a,... de la bande magnétique non alignées, permettant d'améliorer la diaphonie entre pistes voisines).

Le transducteur magnétooptique peut également fonctionner selon un autre mode : si l'on utilise un matériau magnéto-optique en couche mince présentant une anisotropie oblique, comme par exemple le grenat d'Yttrium et de fer non dopé, où l'aimantation s'oriente à 45° de la normale à la couche, il est possible d'observer la variation de cet angle sous l'effet du flux délivré par la bande. On peut faire varier entre la normale à la couche et la parallèle à la couche l'angle d'anisotropie en faisant varier le dopage du grenat. La rotation Faraday que subit le faisceau lumineux d'analyse est proportionnelle à la composante de l'aimantation selon l'axe de propagation du faisceau. Elle sera donc modulée au rythme de l'information enregistrée sur la bande.

Dans ce mode de fonctionnement, il est préférable de rendre le matériau monodomaine sur chacune des deux pièces polaires ou sur l'ensemble du dispositif. Ceci peut être réalisé par un choix judicieux des dimensions des pôles et de l'épaisseur de la couche ou de la nature du matériau ou encore en appliquant un champ uniforme à l'ensemble du dispositif.

Le faisceau de lecture du transducteur est projeté selon l'une des figures 7(a) A 7(c), en fonction de l'étendue du monodomaine. Dans le cas où le monodomaine s'étend sur une surface approximativement égale à la surface occupée par les deux pièces polaires, il est avantageux de focaliser le faisceau de lecture près du milieu de ce monodomaine, au niveau de l'entrefer.

## Revendications

1. Tête de lecture magnéto-optique à haute résolution pour la lecture d'un support d'enregistrement, comportant au moins une microtête formée sur un substrat (2', 38), cette micro-tête comprenant un transducteur magnéto-optique (3', 11, 39) et deux pièces polaires (7, 8 - 12A, 12B - 40, 41) en matériau magnétique séparées par un entrefer étroit (9, 12C, 42) sensiblement perpendiculaire au sens de défilement du support d'enregistrement, caractérisé en ce que ces deux pièces polaires et l'entrefer sont formés sur la face du transducteur magnéto-optique faisant face au support d'enregistrement lors de la lecture.

2. Tête de lecture selon la revendication 1, caractérisée par le fait que le transducteur et les pièces polaires sont formés selon la technique des couches minces (figure 9).

3. Tête de lecture selon la revendication 1 ou 2, caractérisée en ce que les pièces polaires sont en forme de rectangles, de triangles (45, 46) ou de demi-sinusoïdes (48, 49).

4. Tête de lecture selon l'une des revendications précédentes, caractérisée par le fait que les pièces polaires (40, 41) ont une épaisseur réduite dans leurs zones éloignées de l'entrefer (42), le matériau magnétique manquant étant remplacé par du matériau non magnétique (43, 44).

5. Tête de lecture selon l'une des revendications précédentes, caractérisée par le fait que les entrefers des micro-têtes la composant sont alignés (figures 3, 10a, 10b).

6. Tête de lecture selon l'une des revendications 1 à 4, caractérisée par le fait que les entrefers des micro-têtes successives la composant forment une ligne brisée (figure 10c).

7. Tête de lecture selon l'une des revendications précédentes, caractérisée par le fait que le matériau du transducteur magnéto-optique présente une anisotropie oblique par rapport au plan des deux pièces polaires et est monodomaine sur au moins l'une des deux pièces polaires.

## Patentansprüche

1. Magneto-optischer Lesekopf mit hoher Auflösung zum Lesen eines Aufzeichnungsträgers, mit mindestens einem auf einem Substrat (2', 38) ausgebildeten Mikrokopf, der einen magneto-optischen Transduktor (3', 11, 39) und zwei Polstücke (7, 8; 12A, 12B; 40, 41) aus Magnetmaterial enthält, die durch einen schmalen und im wesentlichen senkrecht zur Laufrichtung des Aufzeichnungsträgers verlaufenden Magnetspalt (9, 12C, 42) getrennt sind, dadurch gekennzeichnet, daß die beiden Polstücke und der Magnetspalt auf der Seite des magneto-optischen Transduktors ausgebildet sind, die beim Lesen dem Aufzeichnungsträger gegenüberliegt.

2. Lesekopf nach Anspruch 1, dadurch gekennzeichnet, daß der Transduktor und die Polstücke mittels Dünnschichttechnologie hergestellt sind (Figur 9).

3. Lesekopf nach Anspruch 1 oder 2, dadurch gekennzeichnet, daß die Polstücke rechteckförmig oder dreieckig (46, 46) sind oder einer halben Sinuswelle ähneln (48, 49).

4. Lesekopf nach einem der vorstehenden Ansprüche, dadurch gekennzeichnet, daß die Polstücke (40, 41) eine verringerte Dicke in den vom Magnetspalt (42) entfernten Zonen besitzen und daß das dort fehlende magnetische Material durch unmagnetisches Material (43, 44) ersetzt ist.

5. Lesekopf nach einem der vorstehenden Ansprüche, dadurch gekennzeichnet, daß die Magnetspalte der den Kopf bildenden Mikroköpfe miteinander fluchten (Figur 3, Figur 10a, Figur 10b).

6. Lesekopf nach einem der Ansprüche 1 bis 4, dadurch gekennzeichnet, daß die Magnetspalte der aufeinanderfolgenden Mikroköpfe des Kopfes eine gebrochene Linie (Figur 10c) bilden.

7. Lesekopf nach einem der vorstehenden Ansprüche, dadurch gekennzeichnet, daß das Material des magneto-optischen Transduktors eine schräge Anisotropie bezüglich der Ebene der beiden Polstücke besitzt und auf mindestens einem der beiden Polstücke nur eine magnetische Domäne aufweist.

## Claims

1. High resolution magneto-optic read head for reading a recording medium, comprising at least one micro-head formed on a substrate (2', 38), this micro-head comprising a magneto-optic transducer (3', 11, 39) and two pole pieces (7,8 - 12A, 12B - 40,41) made of magnetic material separated by a narrow air-gap (9, 12C, 42) substantially perpendicular to the direction of motion of the recording medium, characterized in that these two pole pieces and the air-gap are formed on the face of the magneto-optic transducer which faces the recording medium during reading.

2. Read head according to Claim 1, characterized in that the transducer and the pole pieces are formed using the thin-layer technique (Figure 9).

3. Read head according to Claim 1 or 2, characterized in that the pole pieces are in the shape of rectangles, triangles (45, 46) or semi-sinusoids (48, 49).

4. Read head according to one of the preceding claims, characterized in that the pole pieces (40, 41) have a reduced thickness in their zones distant from the air-gap (42), the missing magnetic material being replaced by non-magnetic material (43, 44).

5. Read head according to one of the preceding claims, characterized in that the air-gaps of the micro-heads forming it are aligned (Figures 3, 10a, 10b).

6. Read head according to one of Claims 1 to 4, characterized in that the air-gaps of the successive micro-heads forming it form a jagged line (Figure 10c).

7. Read head according to one of the preceding claims, characterized in that the material of the magneto-optic transducer exhibits oblique anisotropy with respect to the plane of the two pole pieces and is monodomain over at least one of the two pole pieces.
